# EUROPÄISCHE PATENTSCHRIFT

(11) **EP 3 459 898 B1**
(45) Veröffentlichungstag und Bekanntmachung des Hinweises auf die Patenterteilung: **26.02.2020**
(21) Anmeldenummer: 18188911.4
(22) Anmeldetag: 14.08.2018
(51) Int. Cl.: B66C 6/00, B66C 7/08, B23Q 1/26, B23Q 1/56, E01B 9/32, E01B 9/66, F16B 2/06, F16B 2/14, F16B 5/08

(54) **UNTERTEIL FÜR EINE KLEMMVORRICHTUNG**
BASE FOR A CLAMPING DEVICE
PARTIE INFÉRIEURE POUR UN DISPOSITIF DE SERRAGE

(30) Priorität: 21.09.2017 AT 3762017
(43) Veröffentlichungstag der Anmeldung: 27.03.2019
(73) Patentinhaber: Hans Künz GmbH, 6971 Hard (Vbg.) (AT)
(72) Erfinder: Klapper, Georg, 6971 Hard (AT)
(74) Vertreter: Fechner, Thomas

(56) Entgegenhaltungen:
- EP-A1- 2 017 385
- WO-A1-97/29240
- FR-A1- 2 358 509
- JP-U- S51 107 780
- KR-A- 20150 064 411
- KR-B1- 100 835 188
- US-A- 4 193 544

## Beschreibung

Die vorliegende Erfindung betrifft ein Unterteil für eine Klemmvorrichtung, insbesondere eine Schienenklemmvorrichtung, wobei das Unterteil zum Anschweißen an einen Metallkörper vorgesehen ist, und das Unterteil einen Klemmkörperbefestigungsabschnitt zur Befestigung eines Klemmkörpers der Klemmvorrichtung am Unterteil aufweist. Darüber hinaus betrifft die Erfindung auch eine Klemmvorrichtung, insbesondere Schienenklemmvorrichtung, mit einem solchen Unterteil und eine Anordnung eines solchen Unterteils auf einem Metallkörper.

Z.B. beim Bau von Kränen, insbesondere Portalkränen, müssen häufig Schienen oder andere Anbauteile an Metallkörpern wie z.B. Stahlträgern, Kranträgern und dergleichen befestigt werden. Auf solchen Schienen können z.B. Laufkatzen von Portalkränen oder dergleichen geführt sein. Beim Stand der Technik werden zur Befestigung dieser Schienen am Metallkörper Klemmvorrichtungen verwendet, welche ein Unterteil aufweisen, welches am Metallkörper befestigt wird. Darüber hinaus weisen diese Klemmvorrichtungen auch einen Klemmkörper auf, der im Klemmkörperbefestigungsabschnitt am Unterteil angeschraubt oder anderweitig befestigt wird. Der Klemmkörper drückt dann seitlich neben dem Unterteil auf den Schienenfuß, um dies am Metallkörper festzuklemmen. Es sind beim Stand der Technik verschiedene solcher Klemmvorrichtungen bekannt. Bei gattungsgemäßen, z.B. in der EP 2 017 385 A1 gezeigten, Technologien wird das Unterteil der Klemmvorrichtung im Bereich des Klemmkörperbefestigungsabschnittes des Unterteils am Metallkörper angeschweißt. Die Praxis zeigt, dass hier beim Stand der Technik sehr ungünstige Kerbfälle entstehen. Dies wirkt sich negativ auf die Ermüdungsfestigkeit der Klemmvorrichtung und ihrer Befestigung am Metallkörper auf. Dieser Umstand wird aktuell noch verschärft, da die aus den einschlägigen Regelwerken und Normen hervorgehenden Anforderungen in letzter Zeit noch verschärft wurden. Ein weiteres Problem bei den an sich bekannten Klemmvorrichtungen und ihren gattungsgemäßen Unterteilen besteht in der Korrosionsanfälligkeit durch eindringendes Niederschlagswasser.

Es sind beim Stand der Technik auch bereits Ansätze bekannt, bei denen die Unterteile der Klemmvorrichtungen am Metallkörper nicht angeschweißt sondern angeschraubt werden. Dies ist allerdings problematisch, wenn der Metallkörper ein abzudichtender Hohlkörper ist. Außerdem ist die Akzeptanz von geschraubten Unterteilen am Markt zum Teil nur geringfügig vorhanden.

Aufgabe der Erfindung ist es somit, ein gattungsgemäßes, am Metallkörper anzuschweißendes Unterteil für eine Klemmvorrichtung dahingehend zu verbessern, dass die Langlebigkeit des Metallkörpers unter einer Klemmvorrichtung mit einem solchen Unterteil verbessert wird.

Gemäß der Erfindung ist hierzu vorgesehen, dass das Unterteil zumindest einen über den Klemmkörperbefestigungsabschnitt hinausragenden Fortsatz aufweist, wobei eine Unterseite des Klemmkörperbefestigungsabschnitts und eine Unterseite des Fortsatzes gemeinsam eine Anlagefläche zur Anlage des Unterteils an dem Metallkörper ausbilden und die in Richtung normal auf die Anlagefläche gemessene Dicke des Unterteils im Klemmkörperbefestigungsabschnitt größer als im Bereich des Fortsatzes ist und dass ein Übergangsbereich des Unterteils zwischen dem Klemmkörperbefestigungsabschnitt und dem Fortsatz des Unterteils ausgebildet ist und in dem Übergangsbereich eine der Anlagefläche gegenüberliegende Oberseite des Unterteils stärker als im Bereich des Klemmkörperbefestigungsabschnitts und stärker als im Bereich des Fortsatzes abgeschrägt und/oder gekrümmt ausgebildet ist.

In anderen Worten ist gemäß der Erfindung somit vorgesehen, das Unterteil mit unterschiedlich dicken Bereichen auszugestalten. Der Klemmkörperbefestigungsabschnitt des Unterteils kann dabei eine ausreichende Dicke aufweisen, um darin bzw. daran Mittel, insbesondere Schrauben, zur Befestigung des Klemmkörpers sicher befestigen zu können. Der erfindungsgemäß vorgesehene, zusätzliche und über den Klemmkörperbefestigungsabschnitt hinausragende Fortsatz wird dann mit einer, gegenüber dem Klemmkörperbefestigungsabschnitt geringeren, Dicke ausgeführt. Zwischen dem Klemmkörperbefestigungsabschnitt und dem Fortsatz befindet sich ein Übergangsbereich des Unterteils, welcher den Klemmkörperbefestigungsabschnitt mit der größeren Dicke und den Fortsatz mit der geringeren Dicke miteinander verbindet. Um den Dickenübergang im Übergangsbereich zu realisieren, ist die Oberseite des Unterteils im Übergangsbereich stärker abgeschrägt und/oder gekrümmt ausgebildet als im Klemmkörperbefestigungsabschnitt und auch als im Bereich des Fortsatzes. Der Übergangsbereich bildet somit eine Stufe bzw. Rampe, welche den Fortsatz mit dem Klemmkörperbefestigungsabschnitt verbindet. Bevorzugt hat der Übergangsbereich zwischen dem Fortsatz und dem Klemmkörperbefestigungsabschnitt eine gewisse Längserstreckung, was eine rampenförmige Ausgestaltung der Oberseite des Unterteils im Übergangsbereich mit sich bringt. Die Längserstreckung des Übergangsbereichs kann aber auch reduziert werden, sodass sich ein eher stufenförmiger Übergang auf der Oberseite zwischen dem Klemmkörperbefestigungsabschnitt und dem Fortsatz ergibt. Der Vollständigkeit halber wird darauf hingewiesen, dass die Unterseite des Übergangsbereichs mit der Unterseite des Klemmkörperbefestigungsabschnitts und der Unterseite des Fortsatzes gemeinsam die Anlagefläche zur Anlage des Unterteils an dem Metallkörper ausbilden.

Durch die erfindungsgemäße Ausbildung des Unterteils mit zumindest einem Fortsatz lässt sich beim Anschweißen des Unterteils am Metallkörper ein wesentlich besserer Kerbfall als beim Stand der Technik erzielen. Die Praxis zeigt, dass sich durch die erfindungsgemäßen Maßnahmen um ca. 40% höhere zulässige Spannungen im Ermüdungsnachweis erreichen lassen, was bei einem Metallkörper in Form eines reinen Biegeträgers zu einer Gewichtsreduktion von ca. 10% bis 20% genutzt werden kann. Erfindungsgemäße Unterteile können allseitig schweißbar ausgebildet sein. Sie sind auch uneingeschränkt einsetzbar bei Metallkörpern, welche als Dichtkörper ausgeführt sind, wie z.B. Tragarmen von Portalkränen oder dergleichen. Außerdem ergibt sich bei erfindungsgemäßen Unterteilen durch das Anschweißen am Metallkörper auch eine hohe Akzeptanz beim Kunden.

Die erfindungsgemäße Ausgestaltung des Unterteils ist besonders gut in einem Längsschnitt durch das Unterteil zu sehen.

Es wird darauf hingewiesen, dass das Unterteil weder im Klemmkörperbefestigungsabschnitt noch im Bereich des Fortsatzes jeweils eine konstante Dicke aufweisen muss. Im Klemmkörperbefestigungsabschnitt können z.B. auf der Oberseite des Unterteils auch Schrägflächen oder Führungskanten mit ausgebildet sein, um mit dem auf dem Unterteil zu befestigenden Klemmkörper der Klemmvorrichtung in weiter unten noch näher erläuterter Art und Weise zusammenzuwirken. Dies kann dazu führen, dass der Klemmkörperbefestigungsabschnitt in verschiedenen Bereichen verschiedene Dicken aufweist.

Der Fortsatz könnte auch als Zunge bezeichnet werden. Im Bereich des Fortsatzes können die Oberseite und die Unterseite des Unterteils in zueinander parallelen Ebenen verlaufen. Dann hat der Fortsatz über seinen gesamten Bereich eine konstante Dicke. Dies muss aber nicht zwingend so sein. Auch der Fortsatz kann z.B. durch eine leicht abgeschrägt verlaufende Oberseite in unterschiedlichen Bereichen unterschiedliche Dicken aufweisen. Die Neigung der Oberseite relativ zur Unterseite des Fortsatzes sollte aber relativ gering sein. Günstigerweise schließen die Oberseite und die auf der gegenüberliegenden Unterseite des Fortsatzes vorhandene Anlagefläche im Bereich des Fortsatzes einen Winkel kleiner oder gleich 10°, vorzugsweise kleiner oder gleich 5°, miteinander ein. Obwohl die Dicke somit sowohl im Bereich des Fortsatzes als auch im Bereich des Klemmkörperbefestigungsabschnittes variieren kann, ist gemäß der Erfindung trotzdem vorgesehen, dass die Dicke des Unterteils im Bereich des Fortsatzes überall geringer als die Dicke des Unterteils im Bereich des Klemmkörperbefestigungsabschnittes ist. In anderen Worten ist also zwingend vorgesehen, dass die maximale Dicke des Unterteils im Bereich des Fortsatzes auf jeden Fall kleiner als die minimale Dicke des Unterteils im Bereich des Klemmkörperbefestigungsabschnittes ist.

Bevorzugte Ausgestaltungsformen der Erfindung sehen vor, dass die in Richtung normal auf die Anlagefläche gemessene Dicke des Unterteils im Klemmkörperbefestigungsabschnitt im Bereich von 15mm bis 30mm, vorzugsweise im Bereich von 20mm bis 25mm, liegt. Beim Fortsatz liegt die Dicke des Unterteils in Richtung normal auf die Anlagefläche gemessen günstigerweise im Bereich von 4mm bis 10mm, bevorzugt im Bereich von 5mm bis 6mm.

Bei der Erfindung ist vorgesehen, dass die Unterseite des Klemmkörperbefestigungsabschnittes und die Unterseite des Fortsatzes gemeinsam eine Anlagefläche bilden, mit der das Unterteil an dem Metallkörper angelegt wird, um so dann festgeschweißt zu werden. Bevorzugt ist vorgesehen, dass ein Übergang der Anlagefläche vom Klemmkörperbefestigungsabschnitt zum Fortsatz zumindest an den Rändern der Anlagefläche stetig ausgebildet ist. Bevorzugt ist der besagte Übergang der Anlagefläche vom Klemmkörperbefestigungsabschnitt zum Fortsatz im Bereich des gesamten Übergangs bzw. im gesamten Übergangsbereich, also nicht nur an den Rändern, der Anlagefläche stetig ausgebildet. Mit stetig ausgebildet ist dabei gemeint, dass der Übergang zwischen Klemmkörperbefestigungsabschnitt und Fortsatz im Bereich der Anlagefläche bzw. zumindest im Bereich der Ränder der Anlagefläche nicht stufig oder vor- oder rückspringend ausgebildet ist, sondern eben einen sozusagen glatten Übergang bildet. Der Vollständigkeit halber wird darauf hingewiesen, dass die Anlagefläche natürlich im Sinne des oben genannten stetigen Übergangs auch im Übergangsbereich der Unterseite des Unterteils ausgebildet ist.

Die die Anlagefläche ausbildende Unterseite des Unterteils im Bereich des Klemmkörperbefestigungsabschnitts, des Fortsatzes und auch des Übergangsbereichs kann grundsätzlich auch als gewölbte Fläche ausgebildet sein. Um das Unterteil aber möglichst gut auf ebenen Oberflächen des Metallkörpers anschweißen zu können, sehen bevorzugte Varianten der Erfindung vor, dass zumindest der gesamte Rand der Anlagefläche des Unterteils in einer Ebene liegt. Besonders bevorzugte Varianten sehen vor, dass die gesamte Anlagefläche des Unterteils als eine Ebene ausgebildet ist.

Die Oberseite des Unterteils ist die der Anlagefläche gegenüberliegende Oberfläche des Unterteils. Sie erstreckt sich sowohl im Bereich des Fortsatzes als auch im Übergangsbereich als auch im Klemmkörperbefestigungsabschnitt des Unterteils.

Das Unterteil könnte auch als Tragteil der Klemmvorrichtung bezeichnet werden.

Bevorzugte Ausführungsvarianten sehen vor, dass das Unterteil in einer Längsrichtung länglich erstreckt ist. In anderen Worten handelt es sich also günstigerweise beim Unterteil um einen längserstreckten bzw. länglich erstreckten Körper. Der Klemmkörperbefestigungsabschnitt und der Übergangsbereich und der Fortsatz des Unterteils sind dabei günstigerweise in Längsrichtung hintereinander angeordnet. Bevorzugte Varianten der Erfindung sehen vor, dass das Unterteil zwei Fortsätze aufweist, welche bevorzugt auf einander gegenüberliegenden Seiten des Klemmkörperbefestigungsabschnittes angeordnet sind und jeweils über einen Übergangsbereich an diesen anschließen. Bevorzugt ist somit in Längsrichtung gesehen an beiden Enden des Unterteils jeweils ein Fortsatz ausgebildet.

Bevorzugte Varianten der Erfindung sehen vor, dass der Klemmkörperbefestigungsabschnitt und der Fortsatz des Unterteils materialeinstückig als ein gemeinsames Bauteil ausgebildet sind. Bevorzugt ist das gesamte Unterteil materialeinstückig als ein einziges gemeinsames Bauteil ausgebildet. Der Vollständigkeit halber wird darauf hingewiesen, dass damit natürlich auch der Übergangsbereich bzw. die Übergangsbereiche des Unterteils zwischen Klemmkörperbefestigungsabschnitt und Fortsatz gegebenenfalls jeweils ein Teil dieses materialeinstückigen Körpers ist bzw. sind. Der Klemmkörperbefestigungsabschnitt und der Fortsatz bzw. die Fortsätze und auch der Übergangsbereich bzw. die Übergangsbereiche des Unterteils, vorzugsweise das gesamte Unterteil, bestehen günstigerweise aus schweißbarem Metall, vorzugsweise schweißbarem Stahl. Besonders bevorzugt handelt es sich dabei beim Unterteil um ein einstückiges Gussteil, z.B. aus Feinguss und/oder Stahlguss. Es kann sich aber auch um ein gesenkgeschmiedetes Teil handeln.

Der Klemmkörperbefestigungsabschnitt weist bei bevorzugten Ausgestaltungsformen der Erfindung zur Befestigung des Klemmkörpers am Unterteil zumindest eine hinterschnittene Nut zur Aufnahme eines Schraubenkopfes einer Schraube auf, wobei die Nut zumindest eine Schulter zum formschlüssigen Festhalten des Schraubenkopfes in der Nut aufweist und das Unterteil im Bereich eines Nutgrundes, welcher die Nut in Richtung hin zur Unterseite des Klemmkörperbefestigungsabschnittes begrenzt, eine Ablassöffnung für in die Nut eindringendes Wasser aufweist. Bei diesen Ausgestaltungsformen kann somit der auf die Schiene oder das sonstige Anbauteil einwirkende Klemmkörper mittels zumindest einer Schraube am Klemmkörperbefestigungsabschnitt des Unterteils befestigt werden. Die Schraube weist hierzu einen gewindetragenden Schraubenschaft und einen Schraubenkopf auf, wobei der Schraubenkopf einen größeren Durchmesser als der Schraubenschaft aufweist. Hierdurch kann der Schraubenkopf in der hinterschnittenen Nut von deren Schulter formschlüssig festgehalten werden, während der Schraubenschaft aus der Nut herausragt, damit der Klemmkörper auf ihm z.B. mittels einer Mutter festgeschraubt werden kann. Die Schrauben sind günstigerweise aus Metall, vorzugsweise Stahl, ausgebildet. Die genannte Ablassöffnung im Bereich des Nutgrundes ermöglicht es, dass in die Nut z.B. bei Niederschlägen eindringendes Wasser aus der Nut ablaufen kann. Hierdurch wird verhindert, dass sich in der Nut dauerhaft Wasser sammelt. Dies verbessert den Korrosionsschutz und damit die Langlebigkeit des Unterteils an sich und seiner Schweißverbindung mit dem Metallkörper. Somit wird wesentlich besser als beim Stand der Technik verhindert, dass durch sich in der Nut ansammelndes und dort über längere Zeiträume stehendes Wasser Korrosionsschäden am Unterteil entstehen.

In bevorzugten Ausgestaltungsformen ist vorgesehen, dass die Nut den Klemmkörperbefestigungsabschnitt nicht vollständig durchdringt. In diesen Fällen ist somit der Nutgrund ein Bestandteil des Unterteils und in anderen Worten im Unterteil ausgebildet. Dies verhindert, dass in die Nut eindringendes Wasser bis zu den Schweißnähten gelangen kann, mit denen das Unterteil am Metallkörper angeschweißt ist. Auch hierdurch wird die Korrosionsbeständigkeit und damit auch die Langlebigkeit des Unterteils und seiner Schweißverbindung zum Metallkörper verbessert.

Es kann vorgesehen sein, dass die Ablassöffnung so ausgebildet ist, dass der Schraubenkopf durch die Ablassöffnung in die Nut einführbar ist. In diesem Fall hat die Ablassöffnung somit zwei Funktionen. Zum einen kann durch sie das in die Nut eindringende Wasser aus der Nut wieder abfließen. Zum anderen kann durch eine so ausgebildete Ablassöffnung auch der Schraubenkopf in die Nut eingeführt werden. Bevorzugte Ausgestaltungsformen sehen dabei vor, dass der Schraubenkopf ausschließlich durch die Ablassöffnung in die Nut einführbar ist. Weiters sehen bevorzugte Varianten vor, dass die Ablassöffnung die Nut in Richtung hin zum Fortsatz begrenzt. In anderen Worten ist in diesen Varianten also vorgesehen, dass die Ablassöffnung zum Fortsatz weist.

Bei bevorzugten Ausgestaltungsformen von erfindungsgemäßen Unterteilen für Klemmvorrichtungen ist vorgesehen, dass im Klemmkörperbefestigungsabschnitt zwei der genannten Nuten vorhanden sind, sodass der Klemmkörper mittels zweier Schrauben am Unterteil befestigt werden kann. Vorzugsweise sind beide Nuten dann entsprechend der oben genannten Merkmale ausgebildet.

Zusätzlich zum Unterteil an sich betrifft die Erfindung auch eine Klemmvorrichtung, welche ein erfindungsgemäßes Unterteil zum Anschweißen an einen Metallkörper und einen Klemmkörper zum Festklemmen einer Schiene oder eines sonstigen Anbauteils an den Metallkörper aufweist, wobei der Klemmkörper, vorzugsweise mittels zumindest einer Schraube, am Klemmkörperbefestigungsabschnitt des Unterteils befestigbar ist. Wenn die erfindungsgemäße Klemmvorrichtung zum Festklemmen einer Schiene vorgesehen und ausgebildet ist, so kann sie auch als Schienenklemmvorrichtung bezeichnet werden. Mit erfindungsgemäßen Klemmvorrichtungen können aber auch andere Anbauteile wie z.B. Rohre, Leitungen oder dergleichen am Metallkörper festgeklemmt werden, sodass allgemein von einer Klemmvorrichtung gesprochen wird.

Bei dem Metallkörper, an dem mittels der erfindungsgemäßen Klemmvorrichtung die Schiene oder das sonstige Anbauteil befestigt wird, kann es sich um unterschiedlichste Körper bzw. Bauteile handeln. Besonders bevorzugt werden erfindungsgemäße Klemmvorrichtungen aber bei der Ausgestaltung von Kränen, insbesondere Portalkränen, eingesetzt, insbesondere um Schienen an Tragarmen wie z.B. dem Hauptträger eines Portalkrans zu befestigen. In diesen Ausgestaltungsformen sind dann die Metallkörper die genannten Tragarme bzw. Hauptträger solcher Kräne bzw. Portalkräne, an denen dann mittels der erfindungsgemäßen Klemmvorrichtung Schienen oder sonstige Anbauteile befestigt werden.

Beim Klemmkörper handelt es sich um den Teil der Klemmvorrichtung, welcher zum Festklemmen der Schiene oder des sonstigen Anbauteils diese bzw. dieses an den Metallkörper drückt, also direkt auf die Schiene bzw. das sonstige Anbauteil einwirkt. Der Klemmkörper kann hierzu seitlich, also in Richtung Schiene bzw. Anbauteil, über das Unterteil der Klemmvorrichtung überstehen und mit diesem überstehenden Bereich direkt oder unter Zwischenschaltung eines Kontaktelementes auf die Schiene oder das sonstige Anbauteil drücken. Das Kontaktelement kann z.B. aus Hartgummi bestehen und auf den, bevorzugt aus Stahl ausgeführten Klemmkörper, aufvulkanisiert sein. Bei dem Klemmkörper kann es sich grundsätzlich um solche beim Stand der Technik an sich bekannte Klemmkörper handeln. Klemmkörper können aber natürlich auch für erfindungsgemäße Klemmvorrichtungen besonders ausgestaltet und hergestellt werden. Auf der Oberseite des Klemmkörperbefestigungsabschnittes des Unterteils und auch auf einer entsprechend korrespondierenden Unterseite des Klemmkörpers können Führungskanten und/oder Führungsflächen ausgebildet sein, welche miteinander zusammenwirken, wenn der Klemmkörper am Unterteil befestigt wird. Hierdurch kann eine Führung des Klemmkörpers auf dem Unterteil erreicht werden. Es ist so auch möglich, durch entsprechende Schrägflächen Kräfte mit in verschiedenen Richtungen wirkenden Komponenten auf den Klemmkörper zu übertragen. Außerdem kann mittels einer entsprechenden Oberflächengestaltung an der Oberseite des Klemmkörperbefestigungsabschnitts des Unterteils und der Unterseite des Klemmkörpers auch eine spielfreie Lagerung des Klemmkörpers auf dem Klemmkörperbefestigungsabschnitts des Unterteils sichergestellt werden.

Im Klemmkörper können Löcher und vorzugsweise Langlöcher ausgebildet sein, durch die im Klemmkörperbefestigungsabschnitt gehaltene Schrauben hindurchragen können, um so den Klemmkörper am Unterteil festschrauben zu können.

Ein weiterer Aspekt der Erfindung betrifft eine Anordnung eines erfindungsgemäßen Unterteils oder auch einer entsprechenden erfindungsgemäßen Klemmvorrichtung auf einem Metallkörper, wobei vorgesehen ist, dass das Unterteil mittels einer um den gesamten Rand der Anlagefläche vollständig umlaufenden Schweißnaht am Metallkörper angeschweißt ist. Die um den gesamten Rand der Anlagefläche vollständig umlaufende und in anderen Worten damit in sich geschlossene Schweißnaht ist dabei günstigerweise wasser- und oder luftdicht ausgeführt. Dies verhindert, dass z.B. bei Niederschlägen Wasser in den Bereich zwischen dem Unterteil und dem Metallkörper eindringen kann, womit wiederum ein dauerhafter Korrosionsschutz erreicht und die Langlebigkeit der Verbindung zwischen Unterteil und Metallkörper verbessert wird. Bei der genannten, um den gesamten Rand der Anlagefläche vollständig umlaufenden Schweißnaht kann es sich um die einzige Verbindung zwischen Unterteil und Metallkörper handeln. Das Unterteil ist dann ausschließlich mittels der genannten, um den gesamten Rand der Anlagefläche vollständig umlaufenden Schweißnaht am Metallkörper angeschweißt.

Weitere Merkmale und Einzelheiten bevorzugter Ausgestaltungsformen der Erfindung werden nachfolgend in der Figurenbeschreibung erläutert. Es zeigen:
Fig. 1 eine perspektivische Darstellung eines Abschnitts eines Metallkörpers an dem mittels zwei erfindungsgemäßer Klemmvorrichtungen eine Schiene befestigt ist;
Fig. 2 eine Draufsicht auf die Situation gemäß Fig. 1;
Fig. 3 eine Frontalansicht zur Situation gemäß Fig. 1;
Fig. 4 den Längsschnitt gemäß der Schnittlinie AA aus Fig. 3;
Fig. 5 eine Seitenansicht auf die Situation gemäß Fig. 1;
Fig. 6 einen Schnitt entlang der Schnittlinie BB auf Fig. 5;
Fig. 7 den Bereich D aus Fig. 6 vergrößert;
Fig. 8 einen Schnitt entlang der Schnittlinie CC aus Fig. 5;
Fig. 9 den Bereich E aus Fig. 8 vergrößert;
Fig. 10 eine perspektivische Darstellung des erfindungsgemäßen Unterteils der in den obigen Figuren gezeigten Klemmvorrichtung;
Fig. 11 eine Draufsicht auf dieses Unterteil, wobei die umlaufende Schweißnaht eingezeichnet ist;
Fig. 12 eine Seitenansicht auf das Unterteil gemäß der Fig. 10 und 11;
Fig. 13 ein Schnitt entlang der Schnittlinie FF aus Fig. 12 und
Fig. 14 eine Ansicht von unten auf den in diesem Ausführungsbeispiel verwendeten Klemmkörper.

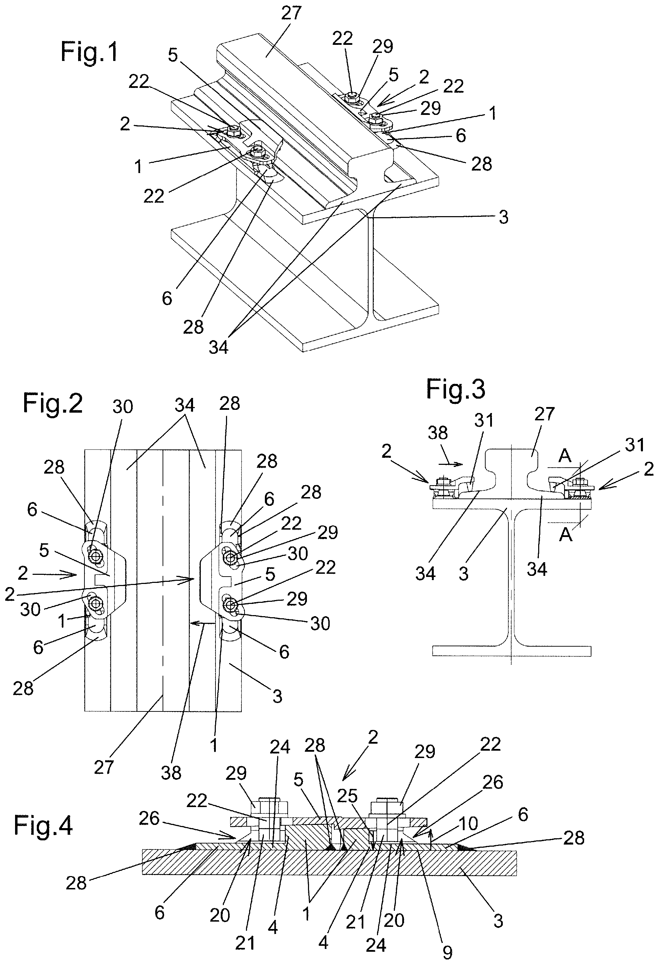

In Fig. 1 ist zu sehen, wie auf einem hier als Doppel-T-Träger ausgebildeten Metallkörper 3 eine Schiene 27 mittels auf einander gegenüberliegenden Seiten der Schiene 27 angeordneten Klemmvorrichtungen 2 befestigt ist. Die hier gezeigten erfindungsgemäßen Klemmvorrichtungen 2 sind also speziell für die Befestigung von Schienen 27 vorgesehen und können somit als Schienenklemmvorrichtungen bezeichnet werden. Die Unterteile 1 der jeweiligen Klemmvorrichtung 2 sind, wie weiter unten noch erläutert, erfindungsgemäß ausgebildet und mittels um den gesamten Rand 16 der Anlagefläche 9 vollständig umlaufenden also in sich geschlossenen Schweißnähten 28 am Metallkörper 3 angeschweißt. Die Schweißnähte 28 sind bevorzugt wasser- und/oder luftdicht ausgeführt. Die jeweiligen Klemmkörper 5 sind jeweils mittels Schrauben 22 und Muttern 29 am jeweiligen Unterteil 1 festgeschraubt und drücken die Schiene 27 gegen den Metallkörper 3. In bevorzugten Ausgestaltungsformen sind sowohl das Unterteil 1 als auch die Schrauben 22 und die Muttern 29 und auch der Klemmkörper 5, abgesehen vom Kontaktelement 31 aus Metall, insbesondere Stahl, ausgeführt. Das Unterteil 1 wie auch der Metallkörper 3 sollten natürlich aus schweißbarem Metall, insbesondere Stahl bestehen, um das Anschweißen des Unterteils 1 am Metallkörper 3 zu ermöglichen.

Der Klemmkörper 5 steht seitlich also quer zur Längsrichtung 18 über das Unterteil 1 über, damit er mit seinem Kontaktelement 31 auf den Fuß 34 der Schiene 27 drücken kann. Im gezeigten Ausführungsbeispiel weist der Klemmkörper 5 hierzu, wie an sich bekannt, das Kontaktelement 31 auf, welches direkt am Fuß 34 der Schiene 27 anliegt. Bei dem Kontaktelement 31 handelt es sich bevorzugt um an den restlichen Klemmkörper 5 anvulkanisiertes oder angeklebtes Hartgummi.

Im Unterteil 1 sind zwei hier in diesem Ausführungsbeispiel und auch in anderen Ausführungsbeispielen bevorzugt in Längsrichtung 18 des Unterteils 1 verlaufende hinterschnittene Nuten 20 ausgebildet. Über deren Ablassöffnung 26 können die Schraubenköpfe 21 der Schrauben 22 in die Nut 20 eingeschoben werden. Die Schraubenköpfe 21, welche in ihrem Durchmesser über die gewindetragenden Schraubenschäfte der Schrauben 22 überstehen, werden formschlüssig von den Schultern 23 der Nut 20 gegen ein Herausziehen aus der Nut 20 in Richtung 10 normal zur Anlagefläche 9 gehalten. Die Schraubenschäfte der Schrauben 22 durchdringen Löcher in den Klemmkörpern 5, welche in bevorzugten, wie den hier gezeigten Ausgestaltungsformen, jeweils als Langloch 30 ausgebildet sind. Mittels der Schrauben 22 und der entsprechenden Muttern 29 können so die Klemmkörper 5 am jeweiligen Unterteil 1 festgeschraubt werden.

Im Schnitt gemäß Fig. 4 ist gut zu sehen, dass beide Nuten 20 in Richtung 25 hin zur Unterseite 7 des Klemmkörperbefestigungsabschnittes 4 von einem Nutgrund 24 begrenzt werden, wobei der Nutgrund 24 ein Teil des Unterteils 1 bzw. des Klemmkörperbefestigungsabschnittes 4 ist. Hierdurch wird verhindert, dass in die Nuten 20 eindringendes Wasser bis zur Anlagefläche 9 des Unterteils 1 am Metallkörper 3 vordringen kann, was einen besonderen Korrosionsschutz darstellt. Darüber hinaus sorgen die Ablassöffnungen 26 am Nutgrund 24 dafür, dass z.B. bei Niederschlägen in die Nuten 20 eindringendes Wasser aus diesen auch schnell wieder ablaufen kann. Auch dies stellt einen besonderen Korrosionsschutz und damit eine Verbesserung der Langlebigkeit des erfindungsgemäßen Unterteils 1 dar.

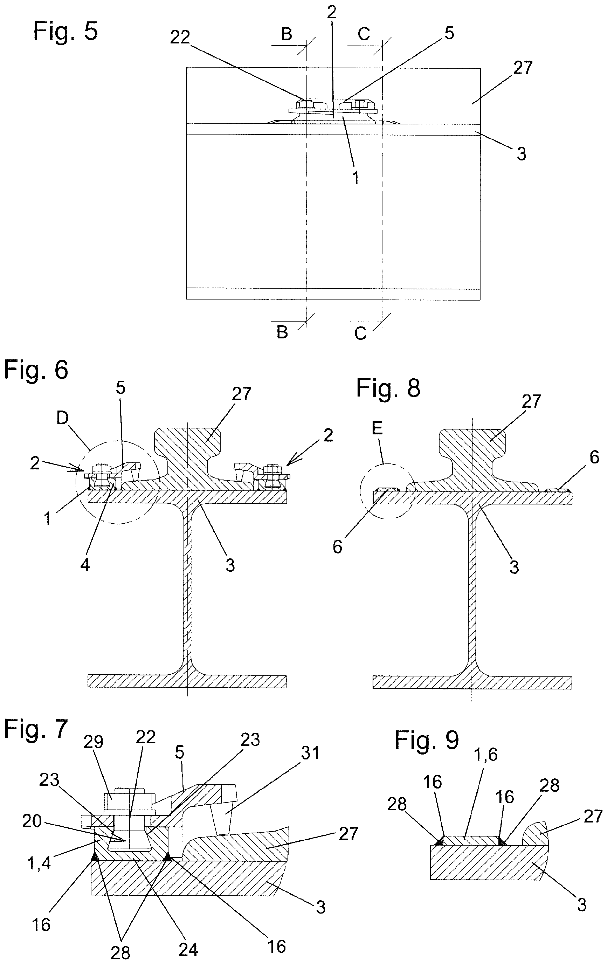

Im Längsschnitt AA gemäß der Fig. 3 und 4 sowie in den Querschnitten BB und CC gemäß der Fig. 5 bis 9 sieht man auch Schnitte durch die vollständig umlaufende, vorzugsweise wasser- und/oder luftdicht ausgeführte Schweißnaht 28, mit der der gesamte Rand 16 der Anlagefläche 9 des Unterteils 1 am Metallkörper 3 angeschweißt ist.

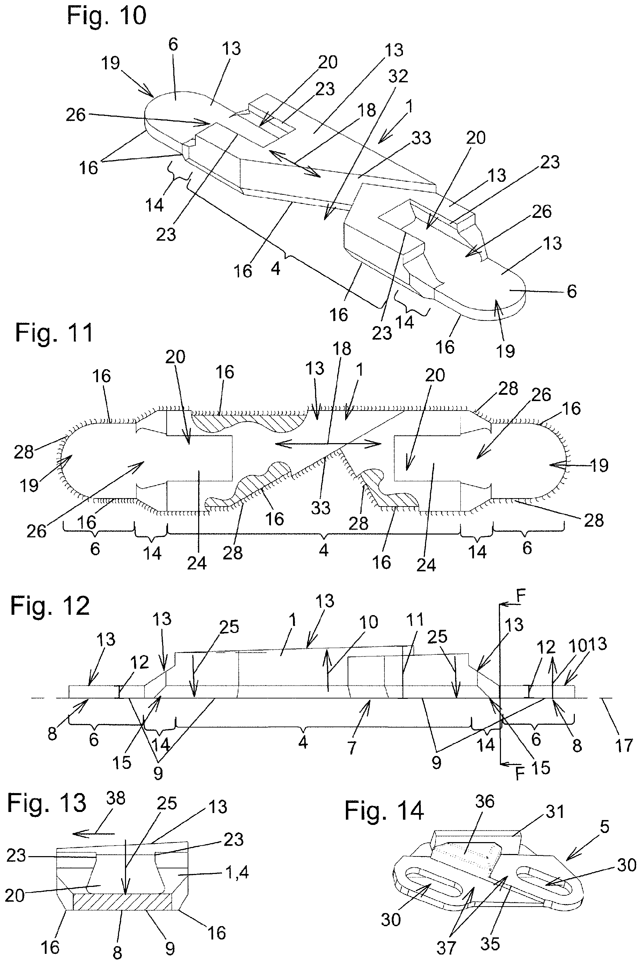

In den Fig. 10, 11 und 12 ist das erfindungsgemäße Unterteil 1 des hier gezeigten Beispiels einer Klemmvorrichtung 2 in einer Perspektive, in einer Draufsicht und in einer Seitenansicht dargestellt. Gut zu sehen sind zunächst die an den in Längsrichtung 18 des Unterteils 1 jeweils an beiden Enden 19 des Unterteils 1 angeordneten Fortsätze 6 sowie die, zwischen den Fortsätzen 6 und dem hier zentral angeordneten Klemmkörperbefestigungsabschnitt 4 des Unterteils 1 angeordneten Übergangsbereiche 14. Im Klemmkörperbefestigungsabschnitt 4 ist die Dicke 11 des Unterteils 1 größer als die Dicke 12 des Unterteils 1 im Bereich des jeweiligen Fortsatzes 6. Die Dicke 11 und 12 werden jeweils normal zur Anlagefläche 9 gemessen. Die Richtung 10 normal auf die Anlagefläche 9 ist in Fig. 12 eingezeichnet. Sie bildet die Flächennormale auf die Anlagefläche 9. Die Richtung 10 ist also orthogonal zur Anlagefläche 9 angeordnet. Die Anlagefläche 9 ist hier als Ebene 17 ausgeführt, welche gemeinsam durch die Unterseiten 7 und 8 des Klemmkörperbefestigungsabschnittes 4 und der Fortsätze 6 sowie der jeweils dazwischen angeordneten Übergangsbereiche 14 gebildet wird. Es ist gut zu sehen, dass sich die so ergebende Anlagefläche 9 stetig, also ohne Sprünge an den Übergängen 15 ausgebildet ist. Mit dieser Anlagefläche 9 wird das Unterteil 1 an den Metallkörper 3 angelegt, um dann am Metallkörper 3 angeschweißt zu werden.

In der Draufsicht gemäß Fig. 11 ist gut zu sehen, dass die Schweißnaht 28 vollständig umlaufend um den gesamten Rand 16 der Anlagefläche 9, also sowohl im Bereich der Fortsätze 6 als auch im Bereich des Befestigungsabschnitts 4 als auch in den dazwischen angeordneten Übergangsbereichen 14 ausgebildet ist. Sie ist somit in sich geschlossen ausgebildet. Durch diese vollständig geschlossene und, vorzugsweise luft- und/oder wasserdichte, Ausführung der Schweißnaht 28 kann verhindert werden, dass Feuchtigkeit in den Bereich zwischen der Anlagefläche 9 des Unterteils 1 und den Metallkörper 3 eindringen kann, sodass auch hierdurch ein guter Korrosionsschutz erreicht wird. Durch das Ausbilden und auch das Anschweißen der Fortsätze 6 wird ein sehr guter Kerbfall erreicht, was zu einer hohen Langlebigkeit und Stabilität der Verbindung zwischen Unterteil 1 und dem Metallkörper 3 und vor allem auch des Metallkörpers 3 im Bereich unter dem Unterteil 1 führt.

In der hier gezeigten wie auch in anderen erfindungsgemäßen Ausgestaltungsformen sind der Klemmkörperbefstigungsabschnitt 4 und die Fortsätze 6 materialeinstückig als ein gemeinsames Bauteil ausgebildet. Dies gilt natürlich dann auch für die Übergangsbereiche 14. Im gezeigten Ausführungsbeispiel ist das gesamte Unterteil 1 materialeinstückig ausgebildet. Bevorzugt handelt es sich, wie eingangs gesagt, um ein Gussteil, insbesondere um ein Feingussteil und/oder ein Stahlgussteil. Das Unterteil 1 kann im Sinne einer Materialeinstückigkeit aber z.B. auch als gesenkgeschmiedetes Bauteil gefertigt werden.

In der Seitenansicht gemäß Fig. 12 ist besonders gut zu sehen, wie sich die Unterseiten 7 des Unterteils 1 im Bereich des Klemmkörperbefestigungsabschnittes 4 sowie die Unterseiten 8 des Unterteils 1 im Bereich der Fortsätze 6 sowie die entsprechenden Abschnitte der Unterseite des Unterteils 1 im Bereich der Übergangsbereiche 14 eine gemeinsame in sich stetige Anlagefläche 9 bilden. Die Anlagefläche 9 könnte generell auch als Auflagefläche bezeichnet werden. Darüber hinaus sieht man in der Seitenansicht 12 auch gut, dass in diesem Ausführungsbeispiel die Dicke 11 im Klemmkörperbefestigungsabschnitt 4 zwar aufgrund von dort als Schrägflächen ausgebildeten Abschnitten der Oberseite 13 variiert, aber überall größer als die Dicke 12 im Bereich der Fortsätze 6 ist. Im gezeigten Ausführungsbeispiel sind die Oberseite 13 und die Unterseite 8 im Bereich des jeweiligen Fortsatzes 6 parallel zueinander ausgebildet. Die Oberseite 13 könnte, wie eingangs erläutert, im Bereich der Fortsätze 6 aber auch leicht schräg also in einem kleinen Winkel relativ zur Anlagefläche 9 ausgebildet sein. In den Fig. 10, 11 und 12 ist auch gut zu erkennen, dass die Oberseite 13 in den Übergangsbereichen 14 stärker sowohl als im Bereich des Klemmkörperbefestigungsabschnitts 4 sowie auch stärker als im Bereich des jeweiligen Fortsatzes 6 abgeschrägt und/oder gekrümmt ausgebildet ist.

Bevorzugte Bereiche der Dicken 11 und 12 wurden eingangs bereits erläutert. Die Länge der Fortsätze 6 in Längsrichtung 18 liegt günstigerweise in einem Bereich von 20 mm bis 50 mm, vorzugsweise von 25 mm bis 40 mm. Die Breite der Fortsätze 6 in Richtung quer zur Längsrichtung 18 liegt günstigerweise im Bereich von 20 mm bis 50 mm, besonders bevorzugt von 25 mm bis 35 mm. Die Länge des Klemmkörperbefestigungsabschnitts 4 in Längsrichtung 18 liegt günstigerweise in einem Bereich von 60 mm bis 160 mm, besonders bevorzugt von 100 mm bis 130 mm. Die Breite des Klemmkörperbefestigungsabschnitts 4 quer zur Längsrichtung 18 liegt günstigerweise im Bereich von 30 mm bis 60 mm, besonders bevorzugt von 35 mm bis 45 mm. Die Länge des jeweiligen Übergangsbereichs 14 in Längsrichtung 18 gesehen, liegt günstigerweise im Bereich von 5 mm bis 30 mm, besonders bevorzugt von 10 mm bis 20 mm.

In den Fig. 10, 11 und auch in der Schnittdarstellung gemäß Fig. 13 entlang der Schnittlinie FF aus Fig. 12 sind gut die hinterschnittenen Nuten 20 im Klemmkörperbefestigungsabschnitt 4 zu sehen, welche dazu dienen, mit ihren Schultern 23 die Schraubenköpfe 21 formschlüssig am Klemmkörperbefestigungsabschnitt 4 gegen ein Herausziehen in Richtung 10 normal zur Anlagefläche 9 zu halten. Gut zu sehen ist in den Fig. 10 und 11 auch die Ablassöffnung 26, welche verhindert, dass sich am Nutgrund 24 Wasser sammeln kann. Der jeweilige Nutgrund 24 kann leicht schräg abfallend ausgeführt sein, um so das Abfließen von Wasser aus der Nut 20 über die jeweilige Ablassöffnung 26 zu unterstützen. Durch diese Ablassöffnung 26 können auch die Schraubenköpfe 21 in die jeweilige Nut 20 eingeführt werden. Die Ausführung des Nutgrundes 24 als Teil des Unterteils bzw. des Klemmkörperbefestigungsabschnitts 4 verhindert, wie bereits erläutert, dass in die Nuten 20 eindringendes Wasser bis zur Anlagefläche 9 vordringen kann.

Die Form der Oberseite 13 des Unterteils 1 kann, wie im hier gezeigten Ausführungsbeispiel, an die Form des zusammen mit dem Unterteil 1 verwendeten Klemmkörpers 5 der Klemmvorrichtung 2 angepasst sein, um eine Führung des Klemmkörpers 5 auf dem Unterteil 1 zu erreichen und/oder um beim Befestigen des Klemmkörpers 5 auf dem Unterteil 1 gezielt Kräfte mit verschiedenen Richtungskomponenten auf den Klemmkörper 5 auszuüben.

Im hier gezeigten Ausführungsbeispiel weist das Unterteil 1 im Klemmkörperbefestigungsabschnitt 4 eine Ausnehmung 32 auf, in der in der Verbindungsstellung zwischen Klemmkörper 5 und Unterteil 1 ein Formkörper 36 des Klemmkörpers 5 angeordnet ist. Durch das Zusammenwirken der die Ausnehmung 32 begrenzenden Flächen des Unterteils 1 mit dem Formkörper 36 können Anschläge zum Begrenzen der Verstellmöglichkeiten des Klemmkörpers 5 auf dem Unterteil 1 geschaffen werden.

Ein weiteres Zusammenwirken der Oberseite 13 des Unterteils 1 mit dem Klemmkörper 5 wird über die Führungskante 33 des Unterteils 1 erreicht, welche mit der Gegenführungskante 35 am Klemmkörper 5 zusammenwirkt. Dieses Zusammenwirken von Führungskante 33 und Gegenführungskante 35 bewirkt, dass ein Verschieben des Klemmkörpers 5 in Längsrichtung 18 des Unterteils 1 auf dem Unterteil 1 immer auch dazu führt, dass der über das Unterteil 1 seitlich hinausstehende Abschnitt des Klemmkörpers 5 mit dem Kontaktelement 31 in einer Richtung orthogonal zur Längsrichtung 18 des Unterteils 1 verschoben wird. So kann eingestellt werden, wie weit der seitlich über das Unterteil 1 hinausstehende Abschnitt des Klemmkörpers 5 mit dem Kontaktelement 31 auf den Fuß 34 der Schiene 27 aufgeschoben wird. Die Langlöcher 30 im Klemmkörper 5 sind hierzu parallel zur Gegenführungskante 35 und damit in der zusammengebauten Stellung letztendlich auch zur Führungskante 33 des Unterteils 1 ausgerichtet. In Fig. 13, welche eine Querschnittsansicht zur Schnittlinie FF aus Fig. 12 zeigt, ist gut zu sehen, dass die Oberseite 13 des Unterteils 1 in einer Richtung orthogonal zur Längsrichtung 18 abgeschrägt ausgebildet ist. In der korrekt montierten Stellung des Unterteils 1 auf dem Metallkörper 3 fällt die Oberseite 13 in Richtung hin zum Fuß 34 der Schiene 27 ab. Beim Befestigen des Klemmkörpers 5 auf dem Unterteil 1 ergibt sich so zusätzlich zum Andrücken des Klemmkörpers 5 in Richtung 25 hin zur Anlagefläche 9 auch eine zusätzliche Kraftkomponente in Richtung 38 parallel zur Anlagefläche 9 und damit in Richtung hin zum Fuß 34 der Schiene 27. Hierdurch wird somit im gezeigten Ausführungsbeispiel beim Anziehen der Muttern 29 auf den Schrauben 22 der Klemmkörper 5 in Richtung 38 hin zum Fuß 34 der Schiene 27 gedrückt, wie dies in den Fig. 2, 3 und 13 auch eingezeichnet ist.

Der Vollständigkeit halber sei darauf hingewiesen, dass letztendlich die Oberseite 13 und die entsprechende Unterseite 37 des Klemmkörpers 5 so ausgestaltet sein sollten, dass sie in gewünschter Art und Weise zusammenwirken. Für die Art der Ausgestaltung gibt es natürlich unterschiedlichste Möglichkeiten, welche im hier gezeigten Beispiel nur exemplarisch angedeutet sind. Dies gilt natürlich in entsprechender Art und Weise auch für den Fall, dass nicht eine Schiene 27 sondern ein anderes Anbauteil mittels einer erfindungsgemäßen Klemmvorrichtung 2 am Metallkörper 3 befestigt werden soll.

**Legende zu den Hinweisziffern:**

| | | | |
|---|---|---|---|
| 1 | Unterteil | 20 | Nut |
| 2 | Klemmvorrichtung | 21 | Schraubenkopf |
| 3 | Metallkörper | 22 | Schraube |
| 4 | Klemmkörperbefestigungsabschnitt | 23 | Schulter |
| 5 | Klemmkörper | 24 | Nutgrund |
| 6 | Fortsatz | 25 | Richtung |
| 7 | Unterseite | 26 | Ablassöffnung |
| 8 | Unterseite | 27 | Schiene |
| 9 | Anlagefläche | 28 | Schweißnaht |
| 10 | Richtung | 29 | Mutter |
| 11 | Dicke | 30 | Langloch |
| 12 | Dicke | 31 | Kontaktelement |
| 13 | Oberseite | 32 | Ausnehmung |
| 14 | Übergangsbereich | 33 | Führungskante |
| 15 | Übergang | 34 | Fuß |
| 16 | Rand | 35 | Gegenführungskante |
| 17 | Ebene | 36 | Formkörper |
| 18 | Längsrichtung | 37 | Unterseite |
| 19 | Ende | 38 | Richtung |

## Patentansprüche

1. Unterteil (1) für eine Klemmvorrichtung (2), insbesondere eine Schienenklemmvorrichtung, wobei das Unterteil (1) zum Anschweißen an einen Metallkörper (3) vorgesehen ist, und das Unterteil (1) einen Klemmkörperbefestigungsabschnitt (4) zur Befestigung eines Klemmkörpers (5) der Klemmvorrichtung (2) am Unterteil (1) aufweist, **dadurch gekennzeichnet, dass** das Unterteil (1) zumindest einen über den Klemmkörperbefestigungsabschnitt (4) hinausragenden Fortsatz (6) aufweist, wobei eine Unterseite (7) des Klemmkörperbefestigungsabschnitts (4) und eine Unterseite (8) des Fortsatzes (6) gemeinsam eine Anlagefläche (9) zur Anlage des Unterteils (1) an dem Metallkörper (3) ausbilden und die in Richtung (10) normal auf die Anlagefläche (9) gemessene Dicke (11, 12) des Unterteils (1) im Klemmkörperbefestigungsabschnitt (4) größer als im Bereich des Fortsatzes (6) ist und dass ein Übergangsbereich (14) des Unterteils (1) zwischen dem Klemmkörperbefestigungsabschnitt (4) und dem Fortsatz (6) des Unterteils (1) ausgebildet ist und in dem Übergangsbereich (14) eine der Anlagefläche (9) gegenüberliegende Oberseite (13) des Unterteils (1) stärker als im Bereich des Klemmkörperbefestigungsabschnitts (4) und stärker als im Bereich des Fortsatzes (6) abgeschrägt und/oder gekrümmt ausgebildet ist.

2. Unterteil (1) nach Anspruch 1, **dadurch gekennzeichnet, dass** der Klemmkörperbefestigungsabschnitt (4) und der Fortsatz (6) des Unterteils (1), vorzugsweise das gesamte Unterteil (1), materialeinstückig als ein gemeinsames Bauteil, vorzugsweise als ein einstückiges Gussteil, und/oder aus einem schweißbaren Metall, vorzugsweise Stahl, ausgebildet sind bzw. ist.

3. Unterteil (1) nach Anspruch 1 oder 2, **dadurch gekennzeichnet, dass** die in Richtung (10) normal auf die Anlagefläche (9) gemessene Dicke (11, 12) des Unterteils (1) im Klemmkörperbefestigungsabschnitt (4) im Bereich von 15 mm bis 30 mm, vorzugsweise von 20 mm bis 25 mm, liegt und/oder beim Fortsatz (6) im Bereich von 4 mm bis 10 mm, vorzugsweise von 5 mm bis 6 mm, liegt.

4. Unterteil (1) nach einem der Ansprüche 1 bis 3, **dadurch gekennzeichnet, dass** ein Übergang (15) der Anlagefläche (9) vom Klemmkörperbefestigungsabschnitt (4) zum Fortsatz (6) zumindest an den Rändern (16) der Anlagefläche (9), vorzugsweise im Bereich des gesamten Übergangs (15) der Anlagefläche (9), stetig ausgebildet ist.

5. Unterteil (1) nach einem der Ansprüche 1 bis 4, **dadurch gekennzeichnet, dass** zumindest der gesamte Rand (16) der Anlagefläche (9) in einer Ebene (17) liegt, vorzugsweise die gesamte Anlagefläche (9) als eine Ebene (17) ausgebildet ist.

6. Unterteil (1) nach einem der Ansprüche 1 bis 5, **dadurch gekennzeichnet, dass** das Unterteil (1) in einer Längsrichtung (18) länglich erstreckt ist und der Klemmkörperbefestigungsabschnitt (4) und der Übergangsbereich (14) und der Fortsatz (6) in Längsrichtung (18) hintereinander angeordnet sind, vorzugsweise in Längsrichtung (18) an beiden Enden (19) des Unterteils (1) jeweils ein Fortsatz (6) ausgebildet ist.

7. Unterteil (1) nach einem der Ansprüche 1 bis 6, **dadurch gekennzeichnet, dass** der Klemmkörperbefestigungsabschnitt (4) zur Befestigung des Klemmkörpers (5) am Unterteil (1) zumindest eine hinterschnittene Nut (20) zur Aufnahme eines Schraubenkopfes (21) einer Schraube (22) aufweist, wobei die Nut (20) zumindest eine Schulter (23) zum formschlüssigen Festhalten des Schraubenkopfes (21) in der Nut (20) aufweist und das Unterteil (1) im Bereich eines Nutgrundes (24), welcher die Nut (20) in Richtung (25) hin zur Unterseite (7) des Klemmkörperbefestigungsabschnitts (4) begrenzt, eine Ablassöffnung (26) für in die Nut (20) eindringendes Wasser aufweist.

8. Unterteil (1) nach Anspruch 7, **dadurch gekennzeichnet, dass** der Nutgrund (24) ein Bestandteil des Unterteils (1) ist und/oder dass der Schraubenkopf (21), vorzugsweise ausschließlich, durch die Ablassöffnung (26) in die Nut (20) einführbar ist und/oder dass die Ablassöffnung (26) die Nut (20) in Richtung hin zum Fortsatz (6) begrenzt.

9. Klemmvorrichtung (2), insbesondere Schienenklemmvorrichtung, welche ein Unterteil (1) nach einem der Ansprüche 1 bis 8 zum Anschweißen an einen Metallkörper (3) und einen Klemmkörper (5) zum Festklemmen einer Schiene (27) oder eines sonstigen Anbauteils an dem Metallkörper (3) aufweist, wobei der Klemmkörper (5), vorzugsweise mittels zumindest einer Schraube (22), am Klemmkörperbefestigungsabschnitt (4) des Unterteils (1) befestigbar ist.

10. Anordnung eines Unterteils (1) nach einem der Ansprüche 1 bis 8 auf einem Metallkörper (3), **dadurch gekennzeichnet, dass** das Unterteil (1), vorzugsweise ausschließlich, mittels einer um den gesamten Rand (16) der Anlagefläche (9) vollständig umlaufenden, vorzugsweise wasser- und/oder luftdichten, Schweißnaht (28) am Metallkörper (3) angeschweißt ist.

## Claims

1. A lower part (1) for a clamping device (2), in particular a rail clamping device, wherein the lower part (1) is provided for welding to a metal body (3), and the lower part (1) has a clamping body securing portion (4) for securing a clamping body (5) of the clamping device (2) to the lower part (1), **characterized in that** the lower part (1) has at least one prolongation (6) extending beyond the clamping body securing portion (4), wherein an underside (7) of the clamping body securing portion (4) and an underside (8) of the prolongation (6) together form a contact surface (9) for contact of the lower part (1) against the metal body (3) and the thickness (11, 12), measured in a direction (10) normal to the contact surface (9), of the lower part (1) is greater in the clamping body securing portion (4) than in the region of the prolongation (6) and **in that** a transition region (14) of the lower part (1) is formed between the clamping body securing portion (4) and the prolongation (6) of the lower part (1) and an upper side (13), opposite the contact surface (9), of the lower part (1) is sloped and/or curved to a greater extent in the transition region (14) than in the region of the clamping body securing portion (4) and than in the region of the prolongation (6).

2. A lower part (1) according to claim 1, **characterized in that** the clamping body securing portion (4) and the prolongation (6) of the lower part (1), preferably the entire lower part (1), is/are formed integrally as a common structural element, preferably as a one-piece cast part, and/or is/are formed from a weldable metal, preferably steel.

3. A lower part (1) according to claim 1 or 2, **characterized in that** the thickness (11, 12), measured in a direction (10) normal to the contact surface (9), of the lower part (1) lies in the range from 15 mm to 30 mm, preferably from 20 mm to 25 mm, in the clamping body securing portion (4) and/or lies in the range from 4 mm to 10 mm, preferably from 5 mm to 6 mm, in the case of the prolongation (6).

4. A lower part (1) according to any one of claims 1 to 3, **characterized in that** a transition (15) of the contact surface (9) from the clamping body securing portion (4) to the prolongation (6) is steady at least at the edges (16) of the contact surface (9), preferably in the region of the entire transition (15) of the contact surface (9).

5. A lower part (1) according to any one of claims 1 to 4, **characterized in that** at least the entire edge (16) of the contact surface (9) lies in one plane (17), preferably the entire contact surface (9) is formed as one plane (17).

6. A lower part (1) according to any one of claims 1 to 5, **characterized in that** the lower part (1) is extended in an elongated manner in a longitudinal direction (18) and the clamping body securing portion (4) and the transition region (14) and the prolongation (6) are arranged behind one another in the longitudinal direction (18), preferably a respective prolongation (6) is formed at both ends (19) of the lower part (1) in the longitudinal direction (18).

7. A lower part (1) according to any one of claims 1 to 6, **characterized in that** the clamping body securing portion (4) for securing the clamping body (5) to the lower part (1) has at least one undercut groove (20) for receiving a screw head (21) of a screw (22), wherein the groove (20) has at least one shoulder (23) for the form-locked fixing of the screw head (21) in the groove (20) and the lower part (1) has, in the region of a groove base (24) bounding the groove (20) in the direction (25) towards the underside (7) of the clamping body securing portion (4), a discharge opening (26) for water penetrating into the groove (20).

8. A lower part (1) according to claim 7, **characterized in that** the groove base (24) is a component part of the lower part (1) and/or **in that** the screw head (21) is insertable, preferably exclusively, through the discharge opening (26) into the groove (20) and/or **in that** the discharge opening (26) bounds the groove (20) in the direction towards the prolongation (6).

9. A clamping device (2), in particular rail clamping device, which has a lower part (1) according to any one of claims 1 to 8 for welding to a metal body (3) and a clamping body (5) for securely clamping a rail (27) or another attachment part to the metal body (3), wherein the clamping body (5) is securable to the clamping body securing portion (4) of the lower part (1), preferably by means of at least one screw (22).

10. An arrangement of a lower part (1) according to any one of claims 1 to 8 on a metal body (3), **characterized in that** the lower part (1) is welded, preferably exclusively, to the metal body (3) by means of a weld seam (28) which completely encircles the entire edge (16) of the contact surface (9) and which is preferably water-tight and/or air-tight.

## Revendications

1. Partie inférieure (1) pour un dispositif de serrage (2), en particulier un dispositif de serrage de rails , dans laquelle la partie inférieure (1) est prévue pour être soudée au niveau d'un corps métallique (3), et la partie inférieure (1) présente une section de fixation de corps de serrage (4) servant à fixer un corps de serrage (5) du dispositif de serrage (2) au niveau de la partie inférieure (1), **caractérisée en ce que** la partie inférieure (1) présente au moins un prolongement (6) dépassant de la section de fixation de corps de serrage (4), dans laquelle un côté inférieur (7) de la section de fixation de corps de serrage (4) et un côté inférieur (8) du prolongement (6) réalisent conjointement une surface d'appui (9) servant à l'appui de la partie inférieure (1) au niveau du corps métallique (3) et l'épaisseur (11, 12) mesurée dans la direction (10) normale à la surface d'appui (9), de la partie inférieure (1) est plus grande dans la section de fixation de corps de serrage que (4) dans la zone du prolongement (6), et **en ce qu'**une zone de transition (14) de la partie inférieure (1) est réalisée entre la section de fixation de corps de serrage (4) et le prolongement (6) de la partie inférieure (1) et, dans la zone de transition (14), un côté supérieur (13), faisant face à la surface d'appui (9), de la partie inférieure (1) présente un chanfrein plus prononcé et/ou une incurvation plus prononcée que dans la zone de la section de fixation du corps de serrage (4) et que dans la zone du prolongement (6).

2. Partie inférieure (1) selon la revendication 1, **caractérisée en ce que** la section de fixation de corps de serrage (4) et le prolongement (6) de la partie inférieure (1), de préférence la totalité de la partie inférieure (1), sont réalisés d'un seul tenant en termes de matériau en tant qu'un composant commun, de préférence sous la forme d'une pièce coulée d'un seul tenant et/ou à partir d'un métal pouvant être soudé, de préférence à partir d'acier.

3. Partie inférieure (1) selon la revendication 1 ou 2, **caractérisée en ce que** l'épaisseur (11, 12), mesurée dans la direction (10) normale à la surface d'appui (9), de la partie inférieure (1) se situe dans la section de fixation de corps de serrage (4) dans la plage de 15 mm à 30 mm, de préférence de 20 mm à 25 mm, et/ou se situe à proximité du prolongement (6) dans la plage de 4 mm à 10 mm, de préférence de 5 mm à 6 mm.

4. Partie inférieure (1) selon l'une quelconque des revendications 1 à 3, **caractérisée en ce qu'**un passage (15) de la surface d'appui (9) depuis la section de fixation de corps de serrage (4) vers le prolongement (6) est réalisé de manière constante au moins au niveau des bords (16) de la surface d'appui (9), de préférence dans la zone de la totalité du passage (15) de la surface d'appui (9).

5. Partie inférieure (1) selon l'une quelconque des revendications 1 à 4, **caractérisée en ce qu'**au moins l'ensemble du bord (16) de la surface d'appui (9) se situe dans un plan (17), de préférence l'ensemble de la surface d'appui (9) est réalisé sous la forme d'un plan (17).

6. Partie inférieure (1) selon l'une quelconque des revendications 1 à 5, **caractérisée en ce que** la partie inférieure (1) s'étend de manière allongée dans une direction longitudinale (18) et la section de fixation de corps de serrage (4) et la zone de transition (14) et le prolongement (6) sont disposés les uns après les autres dans la direction longitudinale (18), de préférence respectivement un prolongement (6) est réalisé dans la direction longitudinale (18) au niveau des deux extrémités (19) de la partie inférieure (1).

7. Partie inférieure (1) selon l'une quelconque des revendications 1 à 6, **caractérisée en ce que** la section de fixation de corps de serrage (4) présente pour fixer le corps de serrage (5) au niveau de la partie inférieure (1) au moins une rainure (20) contre-dépouillée servant à recevoir une tête de vis (21) d'une vis (22), dans laquelle la rainure (20) présente au moins un épaulement (23) servant à retenir par complémentarité de forme la tête de vis (21) dans la rainure (20) et la partie inférieure (1) présente dans la zone d'un fond de rainure (24), lequel délimite la rainure (20) en direction (25) du côté inférieur (7) de la section de fixation de corps de serrage (4), une ouverture d'évacuation (26) pour de l'eau entrée dans la rainure (20).

8. Partie inférieure (1) selon la revendication 7, **caractérisée en ce que** le fond de rainure (24) fait partie intégrante de la partie inférieure (1), et/ou que la tête de vis (21) peut être introduite, de préférence exclusivement, à travers l'ouverture d'évacuation (26) dans la rainure (20), et/ou que l'ouverture d'évacuation (26) délimite la rainure (20) en direction du prolongement (6).

9. Dispositif de serrage (2), en particulier dispositif de serrage de rails, lequel présente une partie inférieure (1) selon l'une quelconque des revendications 1 à 8 destinée à être soudée au niveau d'un corps métallique (3) et un corps de serrage (5) servant à immobiliser par serrage un rail (27) ou un élément rapporté autre au niveau du corps métallique (3), dans lequel le corps de serrage (5) peut être fixé, de préférence au moyen d'au moins une vis (22), au niveau de la section de fixation de corps de serrage (4) de la partie inférieure (1).

10. Agencement d'une partie inférieure (1) selon l'une quelconque des revendications 1 à 8 sur un corps métallique (3), **caractérisé en ce que** la partie inférieure (1) est soudée, de préférence exclusivement, au moyen d'un cordon de soudure (28), de préférence étanche à l'eau et/ou à l'air, s'étendant sur la circonférence complète autour de l'ensemble du bord (16) de la surface d'appui (9), au niveau du corps métallique (3).
